# EUROPEAN PATENT SPECIFICATION

(11) **EP 3 054 792 B1**
(45) Date of publication and mention of the grant of the patent: **22.11.2017**
(21) Application number: 14772392.8
(22) Date of filing: 25.09.2014
(51) Int. Cl.: A23L 27/26, A23L 27/21, A23K 10/40

(54) **COMPOSITIONS WITH A CHICKEN FLAVOUR AND PRODUCTION THEREOF**
ZUSAMMENSETZUNGEN MIT EINEM HUHNGESCHMACK UND HERSTELLUNG DAVON
COMPOSITIONS À SAVEUR DE POULET ET SON PROCÉDÉ DE PRODUCTION

(30) Priority: 27.09.2013 EP 13186316
(43) Date of publication of application: 17.08.2016
(73) Proprietor: DSM IP Assets B.V., 6411 TE Heerlen (NL)
(72) Inventor: GROENEWOLD, Mirjam, Tabitha, NL-6100 AA Echt (NL)
(74) Representative: DSM Intellectual Property
(86) International application number: PCT/EP2014/070553
(87) International publication number: WO 2015/044298

(56) References cited:
- WO-A1-2010/037783
- US-A- 3 689 289
- DATABASE WPI Week 201148 Thomson Scientific, London, GB; AN 2011-H91280 XP002720028, & CN 102 077 977 A (TIANJIN CHUNSHENG ISLAMIC FOODS CO LTD) 1 June 2011 (2011-06-01)

## Description

### Field of the invention

This invention relates to a method for producing a composition with a boiled chicken flavour using extrusion and to the compositions obtainable by this method and to their use in the flavouring of food products.

### Background of the invention

The flavour of meat is the result of a complex combination of different reaction pathways occurring during cooking. The Maillard reaction between amino acids and reducing sugars, the related Strecker degradation of amino acids in presence of Maillard-derived dicarbonyl compounds and the auto-oxidation of lipids are the most important examples. All these reactions, their products and their influence on the taste of food have been the subject of several studies (Motram D.S., (1998) Food Chemistry, 62, pp. 415-424, "Flavour formation in meat and meat products: a review" and references therein; Schrödter, R., Schliemann, R., Woelm, G., (1988) Tech. Charact. Prod. Appl. Food Flavours, pp. 107-114, "Study on the effect of fat in meat flavour formation"). In particular it has been found that lipids, especially those rich in polyunsaturated fatty acids, play a major role in determining the special taste of the different meat species. Saturated and unsaturated aldehydes, which are a major lipid-degradation product, are found in high concentrations between the volatiles of cooked meat and they have been shown to participate in reactions with Maillard intermediates. This interaction seems to have a beneficial effect on the taste of meat.

Combinations of Maillard reactions with lipid oxidations have been exploited in the art to produce or enhance meat flavours. EP-450672 describes the preparation of process flavourings by mildly oxidising a fat, if necessary in the presence of an antioxidant, followed by incorporation into a Maillard reaction mixture and by heat treatment. Applicants have found that this process generates stronger and more balanced process flavouring. However, these compositions have the disadvantage that the production of a good fried chicken character requires the use of chicken fat.

Arachidonic acid has been associated in the art with the production of chicken flavour. US 3,689,289 describes a chicken flavouring composition comprising a hexose, a bland protein hydrolysate, an arachidonic acid compound selected from the free acid, the methyl or ethyl ester thereof or a mixture thereof, cysteine and/or cystine or a nontoxic salt thereof. The composition can be formulated as a solid blend and marketed as such and the chicken flavour is not produced in the initial dry mix but develops once the mixture is heated in the presence of water for five to ten minutes at a temperature between 60 and 90°C. It is important not to heat the composition above 100°C for more than ten minutes; as such treatment destroys chicken flavour. The chicken flavour developed by these compositions has the disadvantage of not being very stable. The flavour of these compositions is therefore usually developed at the moment of use, for example while preparing a soup.

In WO03/051139, a chicken flavour is produced in a two-step process. In the first step, a reducing sugar such as glucose, ribose and others and an amino acid, such as cysteine, cystine, leucine or thiamine are allowed to react with each other at a temperature between 70 and 120°C, in the presence of a solvent, preferably water, under reflux conditions in order to avoid loss of solvent during the heating step. In the second step a glycerol ester of arachidonic acid is added to the mixture obtained after the first step and allowed to react at lower temperature then step 1 (70-100°C). The desired chicken flavour is developed during step 2 of the process. The stability of the chicken flavour obtained by the process of WO03/051139 is much increased compared to the prior art chicken flavours such as in US 3,689,289. The disadvantage of the process of WO03/051139 is the fact that it is a two-step process. For many reasons, not the least from cost perspective, a single step process for the production of the chicken flavour would be much preferred.

Extrusion technology is such a single step process and may be used for the production of process flavours. The principle of extrusion technology is that a composition comprising selected compounds and low water content (e.g. <20 wt%) is mixed and heated and extruded in an extruder at elevated temperatures for short periods of time. The desired flavour formation takes place during the heating step in the extruder. Extrusion differs from the technology where the composition comprising selected compounds and with a higher water content (e.g. >40 wt%) is refluxed at the boiling temperature of the composition such as disclosed in WO03/051139.

Major advantages of the extrusion technology in comparison with the reflux technology or classical oven heating technology are the ease of operation, the reproducibility of the process, the homogeneity of the final product as well as its stability. The extruded product leaves the extruder and is subsequently cooled, the melt may solidify to form a solid state, also referred to as a "glassy state" (WO2010/037783). Such a glassy state may be physically and chemically stable. The individual components of a glassy state product may be no longer distinguishable or separable after extrusion and may therefore advantageously not separate upon storage for prolonged time, e.g. for more than a week or more than a month. A glassy state may limit or inhibit oxygen diffusion and therefore reduces the oxidation of the flavour.

US 4,879,130 in the name of Nestec discloses that flavouring agents may be obtained after plasticizing and extruding a composition comprising 70-95 wt% of a source of amino acids such as hydrolysed vegetable, microbial or animal protein, 0.5-10 wt% of a reducing sugar, 0.5-10% of a sulphur compound and 5-10% added water at a temperature of 80-140°C during 3 seconds - 30 minutes. Examples described in US 4,879,130 are cooked beef and roast chicken. The roast chicken flavour was prepared by plasticizing and extruding a composition comprising 82 wt% acid hydrolysed ground nut cake, 4.5 wt% chicken fat, 0,5 wt% glucose, 3 wt% cysteine, 5 wt% IMP and 5% water.

WO2007/073945 in the name of DSM IP Assets B.V. discloses that a dark roast beef flavour may be obtained by extruding a composition comprising yeast extract, glucose, water and sunflower oil in a twin-screw extruder at 165°C during 1 hour. WO2010/037783 in the name of DSM IP Assets B.V. discloses that a roast chicken flavour may be obtained by extruding a composition comprising yeast extract, glutathione, water and sunflower oil in a twin-screw extruder at 175-180°C during 1 minute. Other examples are dark roast beef (WO2007/073945), fish flavour (WO2010/046313) and concentrated vegetable flavours (WO2011/042499).

In contrast to roast chicken flavour as disclosed in US 4,879,130 and WO2010/037783, the production of a boiled chicken flavour by extrusion technology has not been reported before. It is therefore the purpose of the present invention to provide compositions with a boiled chicken flavour which are stable in time and which are produced in a single step process using extrusion technology.

US3689289 discloses an artificial chicken in solid particulate form, capable of developing the flavour or chicken when heated in the presence of water from five to ten minutes at temperature within the range from about 60 to about 90°, comprising hexose, a bland protein hydrolysate in peptide non-ultimate amino acids form, an arachidonic acid and cysteine / cystine.

### Definitions

**"Yeast"** is defined herein as a solid, paste or liquid composition comprising yeast cells. Examples of liquid compositions are a fermentation broth used for the production of yeast or cream yeast as used in the baking industry and which is a suspension of yeast cells. Cream yeast may have a yeast dry matter between 20-25% or even higher. Liquid compositions having other yeast dry matter contents may be used as well such as 6-20% or 14-18%. Examples of solid compositions are active dried yeast (ADY) or instant dried yeast (IDY) having yeast dry matter contents of at least 90%. An example of a paste like product is compressed yeast having a yeast dry matter between 30 and 40%.

**"Autolysis"** is defined herein as the enzymatic breakdown of yeast using endogenous yeast enzymes and optionally exogenous added enzymes. Autolysis may result in both a yeast autolysate and a yeast extract (see definitions below)

**"Hydrolysis"** is defined herein to the enzymatic breakdown of yeast using only exogenous enzymes. The endogenous yeast enzymes are first inactivated for instance by a heat shock. Hydrolysis may also result in both a yeast autolysate and a yeast extract (see definitions below).

**"Yeast autolysate"** is the concentrated, not extracted, partially soluble digest obtained from food-grade yeasts. Solubilization is accomplished by enzyme hydrolysis or autolysis of yeast cells. Yeast autolysate contains both soluble and insoluble components derived from the whole yeast cell (Food Chemical Codex).

**"Yeast extract"** comprises only the water soluble components of the yeast cell, the composition of which is primarily amino-acids, peptides, carbohydrates and salts. Yeast Extract is produced through the hydrolysis of peptide bonds by the naturally occurring enzymes present in edible yeast and/or or by the addition of food-grade enzymes (Food Chemical Codex), i.e. by autolysis or hydrolysis.

**"Chicken flavour"** is defined herein relates to poultry flavours in general and more specifically to chicken, turkey, pheasant, goose, swan, and duck flavours.

The term **"between"** used in defining numerical ranges is meant herein to include the values of the ranges indicated, for instance, between 1 and 10 wt% means that the water content of the composition is equal to and greater than 1 wt% and equal to or smaller than 10 wt%.

### Detailed description of the invention

In a first aspect the invention provides a process for the production of a boiled chicken flavour comprising heating a composition comprising a reducing sugar and cysteine and arachidonic acid characterized in that the composition is heated and extruded in an extruder at a temperature between 80°C and 140°C. It has surprisingly been found that a composition comprising at least these three compounds (reducing sugar/cysteine/ARA), under mild extrusion conditions with respect to the temperature, is able to give a boiled chicken flavour upon heating and extruding. The three components may be present in the composition between 10 and 100% of the weight of the composition. Heating and extruding a composition comprising the three compounds (reducing sugar/cysteine/ARA) is giving a boiled chicken flavour as is illustrated by the Examples. The skilled person may, without undue burden determine the concentrations of the three compounds (reducing sugar/cysteine/ARA) in the composition in order to give the desired boiled chicken flavour in terms of flavour profile and intensity. Generally, the reducing sugar and cysteine may be present in the composition in a molar ratio comprised between 0.5 and 1.5, more preferably comprised between 0.7 and 1.2. In the composition comprising the three compounds (reducing sugar/cysteine/ARA) the sugar may be present between 30 and 70 wt% and preferably between 40 and 60 wt%. The cysteine may be present between 30 and 70 wt% and preferably between 40 and 60 wt%. The arachidonic acid may be present between 2 and 20 wt% and preferably between 5 and 15 wt%, more preferably between 8 and 12 wt%.

The reducing sugar is preferably a monosaccharide and preferably ribose, xylose, glucose (also known as dextrose), arabinose, rhamnose and/or fructose. More preferably the reducing sugar is glucose. For the development of the boiled chicken flavour, the D, L or D, L forms of the sugars may be used. The present invention does not exclude the possibility of combining more than one reducing sugar. In the latter case, hydrolysates obtained from the chemical or enzymatic degradation of polysaccharides can be used as source of reducing sugars.

The cysteine used in the process of the invention may be L-cysteine, in the form of L-cysteine free base, L-cysteine hydrochloride anhydrous or L-cysteine hydrochloride monohydrate. All these forms are commercially available.

The arachidonic acid may be used in a large variety of forms, such as the free acid or in esterified form. Suitable esters are the methyl, ethyl and isopropyl esters. Most preferred is arachidonic acid esterified to the glycerol moiety of a triglyceride. The arachidonic acid is preferably present in the form of at least 70 wt% of triglycerides, more preferably 80 wt% of triglycerides, even more preferably 90 wt% of triglycerides. A triglyceride comprising arachidonic acid may comprise one, two or three arachidonic acid residues. It is understood that not all triglycerides comprised in the oil should be esterified with arachidonic acid.

Arachidonic acid may be used in the form of an oil rich in arachidonic acid. Said oil can be any fat or oil obtained either from a vegetable, a microbial or an animal source. In a preferred embodiment of the invention the oil is microbial or vegetable oil. The term 'vegetable oil' is intended to include any fat or oil obtained from a vegetable source. The term 'microbial oil' is intended to include any fat or oil obtained from a microbial source for example by a fermentation process. Microbial oils rich in arachidonic acid, whereby said arachidonic acid is esterified to the glycerol moiety of a triglyceride, may be obtained from fermentation of fungi, for example of fungi of the genus *Mortierella,* for example of the species *Mortierella alpina.* The production of some of these oils is for example described in WO92/13086.

It may be advantageous to add other compounds in addition to the three compounds (reducing sugar/cysteine/ARA). In one embodiment, the composition comprises further a yeast extract or a yeast autolysate, or a protein hydrolysate or any combination thereof.

Protein hydrolysates are defined herein as acid or enzymatically treated protein substrates containing mixtures of amino acids and peptides in varying proportions that are determined by the degree of hydrolysis and/or the type of enzymes used. Typical protein substrates for the preparation of protein hydrolysates are vegetable proteins such as wheat gluten, corn gluten, soy protein, rape seed protein, pea protein, alfalfa protein, sunflower protein, fabaceous bean protein, cotton or sesame seed protein, maize protein, barley protein, sorghum protein, potato protein, rice protein, coffee proteins. Other possible protein substrates are animal proteins such as milk protein (e.g. casein, whey protein), egg white, fish protein, meat protein including gelatin, collagen, blood protein (e.g. haemoglobin), hair, feathers and fish meal.

The addition of a yeast extract or yeast autolysate, a protein hydrolysate or any combination thereof results in other amino acids to be present in the composition in addition to cysteine. The advantage is that when also other amino acids are present, a flavour of better quality is obtained. In a preferred embodiment, the composition comprises further a yeast extract or yeast autolysate or any combination thereof.

In a highly preferred embodiment the composition used in the process of the invention comprises at least the four components:
1. a reducing sugar,
2. cysteine,
3. arachidonic acid and
4. a yeast extract or a yeast autolysate or a protein hydrolysate or any combination thereof.

The composition preferably comprises (based on the total weight of the composition):
1. between 1 and 20 wt% of the reducing sugar; and
2. between 0.1 and 15 wt% of the cysteine; and
3. between 1 and 10 wt% of the arachidonic acid;
4. between 10 and 95 wt% of the yeast extract or yeast autolysate or protein hydrolysate or any combination thereof.

Preferably, the composition comprising the at least four components comprises between 1 and 20 wt% of the reducing sugar as defined hereinbefore, more preferably between 3 and 15 wt% and even more preferably between 5 and 10 wt% based on the total weight of the composition. The weight percentage of the reducing sugar is defined herein as the weight of glucose (dextrose), i.e. not on any hydrates thereof.

Preferably, the composition comprising the at least four compounds comprises between 1 and 20% cysteine as defined hereinbefore, more preferably between 5 and 20 wt% and even more preferably between 10 and 15 wt% based on the total weight of the composition. The weight percentage cysteine is defined herein as the weight of the L-cysteine free base, i.e. not on any (hydrated) salt of L-cysteine.

Preferably, the composition comprising the at least four compounds comprises between 0.1 and 10 wt% arachidonic acid as defined hereinbefore, more preferably between 0.1 and 6 wt% and even more preferably between 1 and 4 wt% based on the total weight of the composition. The weight percentage arachidonic acid is defined herein as the weight of the weight of the free acid, i.e. on any esterified form of arachidonic acid.

Preferably, the composition comprising the at least four compounds comprises between 10 and 95 wt% of the yeast extract or yeast autolysate or protein hydrolysate or any combination thereof, based on the total weight of the composition. More preferably, the composition comprises between 30 and 90 wt%, even more preferably between 40 and 85 wt% and most preferably between 50 and 80 wt% the yeast extract or yeast autolysate or protein hydrolysate or any combination thereof based on the total weight of the composition.

The composition used in the process of the invention preferably comprises a low amount of water. The water in the composition may be derived from any of the components present in the composition: the reducing sugar, cysteine, arachidonic acid and/or the yeast extract or the yeast autolysate or the combination of yeast extract and yeast autolysate. In addition, water may be added to the composition. For instance, between 1 and 10 wt% water may be added to the composition based on the total weight of the composition, more preferably between 1 and 9 wt%, more preferably between 1 and 8 wt%, more preferably between 1 and 7 wt%, more preferably between 1 and 6 wt%, most preferably between more preferably between 1 and 5 wt% based on the total weight of the composition. The water content of the composition may be important for obtaining the desired flavour type as well as the desired concentration of the flavour. When the water content of the composition is too high, e.g. more than 10%, the concentration of the vegetable flavour may be too low, or the throughput in the extruder may slow down or stop. When the water content is too low, e.g. less than 1%, burnt-off notes may occur.

In a preferred embodiment, the present composition further comprises leucine. Preferably the present composition comprises less than 20% leucine, more preferably less than 10%, even more preferably less than 10% leucine, most preferably between 0.1 and 5 % leucine. The inclusion of leucine in the present composition contributes to the Maillard reaction in the extrusion process and provides a further enhanced boiled chicken flavour.

The composition used in the process of the invention is heated and extruded at a temperature between 80°C and 140°C in an extruder. The extruder may be any type of extruder suitable for the production of process flavours such as a twin screw extruder. Extruders, such as twin screw extruders, are known in the art. For instance, a suitable extruder is a twin-screw extruder, equipped with several feeders and injectors. The composition of the invention as defined hereinbefore and optionally water may be introduced into the extruder through the same or separate feeders. The product may leave the extruder at a pressure, outside the extruder, varying from reduced pressure (e.g. 5 mbar) to atmospheric pressure (e.g. approximately 1 bar). The extruded product may be further cooled and/or dried using a cooling belt or any other method known in the art. Extrusion may result in a uniform or nearly uniform distribution of the components over the composition, resulting in a homogenous product. A homogenous product may be advantageous since the flavour may be evenly spread over the food or feed. Due to the elevated temperature and/or pressure deployed in an extruder the components of composition may turn into a so-called "melt".

For the production of the boiled chicken flavour, the temperature applied during the extrusion step is between 80°C and 140°C, preferably 90-140°C, more preferably between 90-135°C, more preferably between 100-135°C, more preferably between 100-130°C, more preferably between 110-130°C more preferably between 115-130°C more preferably between 120-130°C and most preferred between 125-130°C. At temperatures below 80°C, the desired flavour development during extrusion becomes very slow and therefore there is a greater risk at the development of undesired off-flavours. At temperature higher than 140°C there is a risk that the flavour type becomes more roast, fried or grilled instead of the desired boiled chicken flavour.

The extrusion time, i.e. the average residence time of the composition in the extruder is in general dependent on the temperature during extrusion. The person skilled in the art can determine the rage residence time of the composition in the extruder without undue burden by varying the temperature and determining the flavour type and concentration resulting from the extrusion process. For instance, the time may be varied between 1 second and 60 minutes. In order to obtain the desired boiled chicken flavour, shorter times must be used at higher temperatures and vice versa. From operational aspect, average residence time of the composition in the extruder between 5 seconds and 30 minutes, more preferably between 10 seconds and 10 minutes, most preferably between 30 seconds and 5 minutes are preferred.

In general, without undue burden, the temperature, residence time and water content of the composition during extrusion may be varied in order to determine the optimal conditions for the desired flavour type and concentration.

In a preferred embodiment of the process of the invention, neutral oil may be added to the composition or added via a separate feeder to the extruder. The product of the process of the first aspect of the invention (i.e. the product having boiled chicken flavour) may be in any form. For example, the product may be in dry or in liquid formulation. The product, when in a dry formulation, may be friable, i.e. it may easily reduce to or give off powder or dust. Dust is generally considered to be hazardous to the health of humans and animals. Adding oil to the composition may render the product less friable and thereby prevents it to give off dust or powder. In a preferred embodiment the oil is hydrogenated sunflower oil. The amount of neutral oil in the composition is preferably between 0.1% and 5% wt%, preferably between 0.2% and 2% wt% and more preferably between 0.5% and 1% wt% based on the total weight of the composition.

In a second aspect, the invention provides a boiled chicken flavour obtainable by the process of the invention. The boiled chicken flavour made by the extrusion process according to the first aspect of the invention is, preferably, an extrudate or extruded boiled chicken flavour. Such an extruded boiled chicken flavour is characterised by a very high homogeneity of the final product as well as a high stability of the boiled chicken flavour. More preferably the present boiled chicken flavour is in the form of a solid state, more preferably in the form of a glassy state. The advantage of providing an extruded boiled chicken flavour is an increased concentration of the boiled chicken flavour. Extrusion provides an intimate mixing of the ingredients wherein the boiled chicken flavour can develop in a concentrated form. Accordingly, in a preferred embodiment, the present boiled chicken flavour obtainable by the process of the invention has a concentrated boiled chicken flavour. More preferably, the present boiled chicken flavour comprises yeast extract or yeast autolysate, a protein hydrolysate or any combination thereof. In another preferred embodiment, the present boiled chicken flavour comprises oil. In a preferred embodiment of the invention the oil is microbial or vegetable oil. In another preferred embodiment the present boiled chicken flavour comprises a reducing sugar, cysteine and/or arachidonic acid. In yet another preferred embodiment the present boiled chicken flavour comprises reducing sugar, cysteine and/or arachidonic acid in combination with a yeast extract, or reducing sugar, cysteine and/or arachidonic acid in combination with a yeast autolysate, or, reducing sugar, cysteine and/or arachidonic acid in combination with a protein hydrolysate.

The boiled chicken flavour according to the present invention remains stable over increased time periods, for example during storage. With stable is meant that the concentration of the boiled chicken flavour obtainable by the process of the invention is stable over time, i.e. that the amount of the boiled chicken flavour obtainable by the process of the invention to be added to a food in order to provide a boiled chicken flavour does not increase over time. Preferably the boiled chicken flavour obtainable by the process of the invention is stable for at least 1 month, more preferably for at least 2 months, 3 months, more preferably at least 6 months, most preferably at least 12 or even for at least 24 months, where the boiled chicken flavour obtainable by the process of the invention is stored between 20 and 25°C in the dark. The stability is advantageously provided by extrusion since it is believed that the arachidonic acid, which is very susceptible to oxidation, is intimately mixed with the other ingredients and therefore became less susceptible to oxidation. The present boiled chicken flavour does not become rancid during storage.

In a third aspect the invention provides a seasoning comprising the boiled chicken flavour of the second aspect of the invention. A seasoning is a mixture of food or feed ingredients, usually consisting of herbs and salt, to be added to food or feed to impart or enhance flavour. The seasoning is preferably a food or feed seasoning. Preferably, the amount of the boiled chicken flavour of the invention in the seasoning is between 0.5 and 10wt%, more preferably between 1 and 5 wt%, most preferably between 2 and 4 wt% based on the total weight of the seasoning.

In a fourth aspect the invention provides food or feed comprising the boiled chicken flavour of the invention. Preferably, the amount of boiled chicken flavour of the invention is between 0.01 and 5wt%, more preferably between 0.05 and 1 wt%, most preferably between 0.1 and 0.5 wt% based on the total weight of the food or feed.

In a fifth aspect the invention provides the use of the boiled chicken flavour of the invention or the seasoning of the invention to impart or enhance boiled chicken flavour in food or feed. The boiled chicken flavour of the invention or the seasoning of the invention may be used for flavouring food products like soups, meat, pasta, crisps, snacks, vegetables etc. The boiled chicken flavour of the invention or the seasoning of the invention may be added to the food or feed in the process of preparation (e.g. in the kitchen) or when the food or feed is ready for consumption, e.g. on the table. The boiled chicken flavour of the invention or the seasoning of the invention may already be effective in diluted concentrations and may therefore be used in a cost-effective manner in the application. By varying the amount of boiled chicken flavour of the invention or the seasoning of the invention in the food or feed the skilled person may, without undue burden, establish suitable amounts of boiled chicken flavour in order to enhance or impart a suitable boiled chicken flavour. The boiled chicken flavour of the invention is preferably added to food or feed in an amount to arrive at a final concentration between 0.01% and 5wt%, preferably between 0.05 and 1wt%, more preferably between 0.1 and 0.5wt% based on the total weight of the food or feed.

### MATERIALS AND METHODS

The yeast extract used in the examples was Gistex® LSX and/or Maxarome® Select as can be obtained from DSM Food Specialties B.V., Delft, The Netherlands.

The arachidonic acid used in the examples was Arasco™ oil as can be obtained from DSM Nutritional Products Inc. (formerly Martek). Arasco oil contains approximately 40% arachidonic acid.

### EXAMPLES

### Example 1

### Production of a boiled chicken flavour

Compositions A-G as depicted in Table 1 were prepared and heated and extruded in a twin-screw extruder. The temperature of the composition in the extruder was 127°C and the reaction time approximately 3 minutes. After extrusion, the compositions A-G were dissolved at a final concentration of 0.02 wt% in a solution comprising 2 wt% of the mixture depicted in Table 1 in hot water and subsequently tasted by an expert tasting panel consisting of 6 assessors.

**Table 1**

| Ingredient | wt% |
|---|---|
| Salt | 35,00 |
| Maltodextrin | 30,45 |
| Vegetable fat powder | 15,00 |
| Modified starch | 10,00 |
| Gistex X2 | 5,00 |
| Maxarome Select | 2,50 |
| Onion powder | 0,80 |
| Turmeric powder | 0,75 |
| Celery seed powder | 0,25 |
| White pepper | 0,25 |
| Total | 100,00 |

This solution comprising 2 wt% of the mixture depicted in Table 1 itself has a weak vegetable taste.

**Table 2**

| Compound | Composition (compounds in wt% of the composition) | | | | | | |
|---|---|---|---|---|---|---|---|
| | A | B | C | D | E | F | G |
| Dextrose monohydrate | 100 | - | - | 50 | 90 | - | 40 |
| L-cysteine | - | 100 | - | 50 | - | 90 | 50 |
| Arachidonic acid (Arasco oil) | - | - | 100 | - | 10 | 10 | 10 |
| Boiled chicken intensity | 0 | 0 | 0 | ± | 0 | 0 | ++ |
| Boiled chicken character | none | none | none | Weak general boiled chicken | none | none | authentic boiled fatty chicken |

The results in Table 2 show that composition G, comprising the three compounds reducing sugar, cysteine and arachidonic acid, has an authentic, boiled, fatty, chicken flavour, while the compounds alone or in combination of two compounds, did not give a boiled chicken flavour with the exception of Composition D which has a very weak general boiled chicken flavour. The wt% in Table 2 indicate the concentration of the respective compound in the composition, for instance 100 gram of composition G contains 40 gram dextrose monohydrate (40 wt%), 50 gram of L-cysteine (50 wt%) and 10 gram Arasco oil (10 wt%), resulting in 4 gram arachidonic acid since the Arasco oil contains 40% arachidonic acid.

### Example 2

### Production of a boiled chicken flavour

Composition G was prepared as described in Example 1. Compositions H and J as depicted in Table 3 were prepared and heated and extruded in a twin-screw extruder. The temperature of the composition in the extruder was 127°C and the reaction time approximately 3 minutes. After extrusion, the compositions H and J were dissolved at a final concentration of 0.2 wt% in water and subsequently tasted by an expert tasting panel.

**Table 3**

| Compound | Composition (compounds in wt% of the composition) | | |
|---|---|---|---|
| | G | H | J |
| Dextrose monohydrate | 40 | 10,0 | 5,00 |
| L-cysteine (which form) | 50 | 12,5 | 6,25 |
| Arachidonic acid (Arasco oil) | 10 | 2,5 | 1,25 |
| Yeast Extract = Gistex LSX | - | 75,0 | 87,5 |
| Boiled chicken intensity | ++ | +++ | +++ |
| Boiled chicken character | authentic boiled fatty chicken | Full creamy boiled chicken breast | Sweet Fatty meaty boiled chicken |

The results in Table 3 show that composition H and J, comprising the three compounds reducing sugar, cysteine and arachidonic acid as well as yeast extract, gave boiled chicken flavours. While composition H has only 1/4 and composition J 1/8 of the 3 components reducing sugar, cysteine and arachidonic acid, the added yeast extract in the compositions result in even improved boiled chicken flavours compared to composition G alone.

## Claims

1. A process for the production of a boiled chicken flavour comprising heating a composition comprising a reducing sugar and cysteine and arachidonic acid **characterized in that** the composition is heated and extruded in an extruder at a temperature between 80°C and 140°C.

2. A process according to claim 1 wherein the composition further comprises yeast extract or yeast autolysate, a protein hydrolysate or any combination thereof.

3. A process according any of the preceding claims wherein the composition further comprises water.

4. A process according to any of the preceding claims wherein the boiled chicken flavour is leaving the extruder at a pressure, outside the extruder, varying from reduced pressure to atmospheric pressure to give the extruded product.

5. A process according to claim 4 wherein the extruded product may be further cooled and/or dried.

6. A process according any of the preceding claims wherein the composition further comprises leucine.

7. A boiled chicken flavour obtainable by the process of any of claims 1-6

8. A seasoning comprising the boiled chicken flavour of claim 7.

9. Seasoning according to claim 8 wherein the amount of boiled chicken flavour is between 0.5 and 10 wt% based on the total weight of the seasoning.

10. Food or feed comprising the boiled chicken flavour of claim 7 or the seasoning of claim 8 or 9.

11. Food or feed according to claim 10 wherein the amount of boiled chicken flavour is between 0.01 and 5wt% based on the total weight of the food or feed.

12. Use of the boiled chicken flavour of claim 7 or the seasoning of claim 8 or 9 to impart or enhance the boiled chicken flavour in food or feed.

13. Use according to claim 12 wherein the boiled chicken flavour is added to the food or feed in an amount to arrive at a final concentration between 0.01% and 5 wt% based on the total weight of the food or feed.

## Patentansprüche

1. Verfahren zum Herstellen eines Aromas von gekochtem Huhn, umfassend Erhitzen einer Zusammensetzung, die einen reduzierenden Zucker und Cystein und Arachidonsäure umfasst, **dadurch gekennzeichnet, dass** die Zusammensetzung in einem Extruder erhitzt und bei einer Temperatur zwischen 80 °C und 140 °C extrudiert wird.

2. Verfahren gemäß Anspruch 1, wobei die Zusammensetzung ferner Hefeextrakt oder Hefeautolysat, ein Proteinhydrolysat oder eine beliebige Kombination davon umfasst.

3. Verfahren gemäß einem der vorstehenden Ansprüche, wobei die Zusammensetzung ferner Wasser umfasst.

4. Verfahren gemäß einem der vorstehenden Ansprüche, wobei das Aroma von gekochtem Huhn den Extruder bei einem Druck verlässt, der außerhalb des Extruders von Unterdruck bis atmosphärischem Druck variiert, um das extrudierte Produkt zu ergeben.

5. Verfahren gemäß Anspruch 4, wobei das extrudierte Produkt ferner gekühlt und/oder getrocknet werden kann.

6. Verfahren gemäß einem der vorstehenden Ansprüche, wobei die Zusammensetzung ferner Leucin umfasst.

7. Aroma von gekochtem Huhn, erhältlich durch das Verfahren gemäß einem der Ansprüche 1-6.

8. Würzmittel, umfassend das Aroma von gekochtem Huhn gemäß Anspruch 7.

9. Würzmittel gemäß Anspruch 8, wobei die Menge an Aroma von gekochtem Huhn zwischen 0,5 und 10 Gew.-%, bezogen auf das Gesamtgewicht des Würzmittels, beträgt.

10. Lebensmittel oder Futtermittel, umfassend das Aroma von gekochtem Huhn gemäß Anspruch 7 oder das Würzmittel gemäß Anspruch 8 oder 9.

11. Lebensmittel oder Futtermittel gemäß Anspruch 10, wobei die Menge an Aroma von gekochtem Huhn zwischen 0,01 und 5 Gew.-%, bezogen auf das Gesamtgewicht des Lebensmittels oder Futtermittels, beträgt.

12. Verwendung des Aromas von gekochtem Huhn gemäß Anspruch 7 oder des Würzmittels gemäß Anspruch 8 oder 9 zum Verleihen oder Verstärken des Aromas von gekochtem Huhn in Lebensmitteln oder Futtermitteln.

13. Verwendung gemäß Anspruch 12, wobei das Aroma von gekochtem Huhn zu dem Lebensmittel oder Futtermittel in einer Menge zugegeben wird, um eine Endkonzentration zwischen 0,01 Gew.-% und 5 Gew.-%, bezogen auf das Gesamtgewicht des Lebensmittels oder Futtermittels, zu erhalten.

## Revendications

1. Procédé pour la production d'un arôme bouillon de poulet comprenant le chauffage d'une composition comprenant un sucre réducteur, de la cystéine et de l'acide arachidonique, **caractérisé en ce que** la composition est chauffée et extrudée dans une extrudeuse à une température comprise entre 80 °C et 140 °C.

2. Procédé selon la revendication 1, dans lequel la composition comprend, en outre, de l'extrait ou de l'autolysat de levure, un hydrolysat de protéines ou une quelconque combinaison de ceux-ci.

3. Procédé selon l'une quelconque des revendications précédentes, dans lequel la composition comprend, en outre, de l'eau.

4. Procédé selon l'une quelconque des revendications précédentes, dans lequel l'arôme bouillon de poulet quitte l'extrudeuse sous une pression, hors de l'extrudeuse, variant d'une pression réduite à la pression atmosphérique pour donner le produit extrudé.

5. Procédé selon la revendication 4, dans lequel le produit extrudé peut être encore refroidi et/ou séché.

6. Procédé selon l'une quelconque des revendications précédentes, dans lequel la composition comprend, en outre, de la leucine.

7. Arôme bouillon de poulet pouvant être obtenu par le procédé selon l'une quelconque des revendications 1 à 6.

8. Assaisonnement comprenant l'arôme bouillon de poulet selon la revendication 7.

9. Assaisonnement selon la revendication 8, dans lequel la quantité d'arôme bouillon de poulet varie entre 0,5 et 10 % en poids sur la base du poids total de l'assaisonnement.

10. Denrées alimentaires ou aliments pour animaux comprenant l'arôme bouillon de poulet selon la revendication 7 ou l'assaisonnement selon la revendication 8 ou 9.

11. Denrées alimentaires ou aliments pour animaux selon la revendication 10, dans lesquels la quantité d'arôme bouillon de poulet varie entre 0,01 et 5 % en poids sur la base du poids total des denrées alimentaires ou aliments pour animaux.

12. Utilisation de l'arôme bouillon de poulet selon la revendication 7 ou de l'assaisonnement selon la revendication 8 ou 9 pour conférer un arôme bouillon de poulet à des denrées alimentaires ou des aliments pour animaux ou pour renforcer ledit arôme.

13. Utilisation selon la revendication 12, dans laquelle l'arôme bouillon de poulet est ajouté à des denrées alimentaires ou des aliments pour animaux en quantité suffisante pour parvenir à une concentration finale comprise entre 0,01 % et 5 % en poids sur la base du poids total des denrées alimentaires ou des aliments pour animaux.
